# EUROPÄISCHE PATENTSCHRIFT

(11) **EP 2 874 558 B1**
(45) Veröffentlichungstag und Bekanntmachung des Hinweises auf die Patenterteilung: **05.10.2016**
(21) Anmeldenummer: 13747653.7
(22) Anmeldetag: 17.07.2013
(51) Int. Cl.: A61C 1/05

(54) **ZAHNÄRZTLICHES PRÄPARATIONSINSTRUMENT**
DENTAL PREPARATION INSTRUMENT
INSTRUMENT DE PRÉPARATION DENTAIRE

(30) Priorität: 17.07.2012 DE 102012212483
(43) Veröffentlichungstag der Anmeldung: 27.05.2015
(73) Patentinhaber: Sirona Dental Systems GmbH, 64625 Bensheim (DE)
(72) Erfinder: REIN, Matthias, 64653 Lorsch (DE); GOISSER, Siegfried, 64683 Einhausen (DE); ERTUGRUL, Metin, 63322 Rödermark (DE); SUTTER, Ralf, 69469 Weinheim (DE)
(74) Vertreter: Sommer, Peter
(86) Internationale Anmeldenummer: PCT/EP2013/065051
(87) Internationale Veröffentlichungsnummer: WO 2014/012958

(56) Entgegenhaltungen:
- EP-A1- 0 497 139
- DE-A1- 10 060 152
- DE-C1- 4 320 532
- DE-C1- 4 428 039

## Beschreibung

### Technisches Gebiet

Die Erfindung betrifft ein zahnärztliches Präparationsinstrument mit einer Turbine zum Antrieb eines Werkzeugs mittels Druckluft. Ein in einer Turbinenkammer angeordneter und sich um eine Längsachse drehenden Rotor weist sich bis zu einer Stirnseite des Rotors hin erstreckende Schaufeln auf. Die Turbinenkammer weist eine der Stirnseite gegenüberliegende Wand und eine Auslassöffhung für die Druckluft zu einem Rückluftkanal hin auf, wobei die Auslassöffnung derart in der Turbinenkammer angeordnet ist, dass zumindest Teile der Schaufeln des Rotors bei der Drehung um die Längsachse an der Auslassöffnung vorbeistreichen.

### Stand der Technik

In bekannten zahnärztlichen Präparationsinstrumenten mit Turbinenantrieb, auch als dentale Turbinen bezeichnet, wird unter Druck stehende Luft genutzt, um einen Rotor anzutreiben. Die kinetische Energie der Luft bewirkt durch Impulsaustausch einen Kraftstoß an den Schaufeln des Rotors. Aus diesem Kraftstoß wird am Rotor ein Drehmoment gebildet und die sich dabei einstellende Drehzahl ist im Leerlauf in erster Linie von der Geschwindigkeit der aus der Düse strömenden Luft abhängig. Bei der Leerlaufdrehzahl, also dem Betrieb der Turbine ohne Last, geht das Drehmoment und damit die nutzbare Leistung genen Null, die maximale Leistung stellt sich in charakteristischer Weise bei der halben Leerlaufdrehzahl ein. Die Erhöhung der Leerlaufdrehzahl zur Erhöhung der maximalen Leistung wirkt sich aber nachteilig auf die Lebensdauer der Lager und auf das Geräuschverhalten von Turbinen aus.

Aus der DE 100 60 152 B4 ist ein dentales Turbinen-Handstück bekannt, bei dem zur Erhöhung des Drehmoments ein Rotor mit einem ersten und mit einem zweiten Turbinenrad versehen ist und es sind Verbindungskanäle vorgesehen, um das Druckmittel vom ersten Turbinenrad zu dem zweiten Turbinenrad umzulenken. In einer Ausführungsform wird das zweite Turbinenrad zweimal durchströmt, was den Rotor bremst und die Drehzahl senkt.

Ein zahnärztliches Präparationsinstrument gemäß dem Oberbegriff des Anspruchs 1 ist auch aus dem DE 4320532 C1 bekannt.

Die Aufgabe der Erfindung besteht darin, zur Verbesserung der Lebensdauer und des Geräuschverhaltens eine Verringerung der Leerlaufdrehzahl zu erreichen, ohne jedoch das maximale Drehmoment oder die Wirkleistung in praktisch relevantem Maß einzuschränken.

### Offenbarung der Erfindung

Das zahnärztliche Präparationsinstrument mit einer Turbine zum Antrieb eines Werkzeugs mittels Druckluft gemäß der Erfindung umfasst einen in einer Turbinenkammer angeordneten und sich um eine Längsachse drehenden Rotor, der sich bis zu einer Stirnseite des Rotors hin erstreckende Schaufeln aufweist. Die Turbinenkammer weist eine der Stirnseite gegenüberliegende Wand und eine Auslassöffnung für die Druckluft zu einem Rückluftkanal hin auf, wobei die Auslassöffnung derart in der Turbinenkammer angeordnet ist, dass zumindest Teile der Schaufeln des Rotors bei der Drehung um die Längsachse an der Auslassöffnung vorbeistreichen. Die Turbinenkammer weist einen der Stirnseite benachbarten Störkonturraum auf, wobei die dem Störkonturraum zugewandte Stirnseite der Schaufeln des Rotors zum Störkonturraum hin offen ist und wobei in dem Störkonturraum eine durch mindestens einen sich in Richtung der Längsachse erstreckender Vorsprung an der der Stirnseite gegenüberliegenden Wand gebildete Störkontur angeordnet ist.

Diese Störkontur in dem Störkonturraum der Turbinenkammer verändert die Richtung der im Störkonturraum befindlichen Luftströmung von einer Strömungsrichtung mit dem Rotor in Umfangsrichtung durch Anströmen der Störkontur hin zu einer Strömungsrichtung entlang der Längsachse zum Rotor und erzeugt eine stark drehzahlabhängige Bremskraft. Die Umfangsgeschwindigkeit der Luft im Störkonturraum ist im Bereich der Störkontur geringer als die Umfangsgeschwindigkeit des Rotors und es entsteht ein Staudruck und damit ein Drehmoment entgegen der Drehrichtung des Rotors, wodurch die Drehzahl sinkt. Da die Bremsleistung in dritter Ordnung von der Drehzahl abhängt, ist die Bremsleistung bei niedrigen Drehzahlen deutlich geringer als bei hohen Drehzahlen, wobei die Bremsleitung über die Geometrie der Störkontur auf die jeweilige Turbine anpassbar ist.

Diese Leerlaufbremse weist keine Verschleißteile auf und lässt sich einfach und sicher sowie kostengünstig herstellen. Es ist zudem nicht erforderlich, die Rotoren oder die Schaufelgeometrie bekannter Turbinen zu verändern.

Vorteilhafterweise kann die im Störkonturräum angeordnete Störkontur in einem Winkelbereich in Umtangsrichtung gegen die Drehrichtung des Rotors gesehen vom mindestens 0°, vorzugsweise von 10° bits 50°, besonders vorzugsweise von 30° zu der Auslassöffnung beabstandet sein.

Wenn die Störkontur unmittelbar im Auslass angebracht wird, kann ein Teil der zum Bremsen vorgesehenen Luft direkt durch die Auslassöffnung entweichen, wodurch die Bremsleistung und damit die Bremswirkung reduziert wird. Ein Abstand zur Auslassöffnung, wie ab einem Winkel von 0° und ganz besonders bei einem Winkel von 30°, erhöht die Bremswirkung und es wird erreicht, dass die Anströmung der Störkontur im Störkonturraum weitgehend frei von der Beeinflussung durch einen Auslässwirbel ist und weitestgehend unabhängig von diesem seine Wirkung entfaltet, die dadurch planbar ist.

Ein Abstand zur Auslassöffnung mit einem Winkel von 30° zur Auslassöffnung ist deshalb besonders geeignet, weil die Störkontur auch weit genug von einer Düse zum Antrieb des Rotors entfernt ist. Zum einen sind dadurch Randeffekte, die durch eine Düse für die Druckluft zum' Antreiben des Rotors hervorgerufen werden, abgeklungen, zum anderen wird die Wirkung der Düse nicht durch die Bremse beeinflusst. Ein großer Abstand zu der Düse bedeutet also geringe Leistungsverluste. Es hat sich also herausgestellt, dass der Abstand zur Auslassöffnung mit einem Winkel von 30° ein Kompromiss ist, bei dem die Leistung bei Nenndrehzahl maximal und die Leerlaufdrehzahl minimal wird.

Vorteilhafterweise kann die im Störkonturraum angeordnete Störkontur eine Höhe in Richtung der Längsachse von mindestens 0,25 mm aufweisen und kann eine Weite eines Spalts zwischen der Störkontur und der Stirnseite des Rotors bis 1 mm, vorzugsweise von 0,1 mm betragen. Es hat sich gezeigt, dass bei diesen Abmaßen ein guter Kompromiss zwischen der erwünschten Bremsleistung im Leerlauf und den Herstellungstoleranzen erzielt wird.

Vorteilhafterweise kann die Störkontür in Umtangsrichtung gesehen eine Breite b auf, die am Außenumfang der Schaufeln gemessen maximal zwei Schaufeln gleichzeitig überdeckt und mindestens 0,1 mm beträgt, wobei sich herausgestellt hat, dass gute Ergebnisse erzielt werden, wenn die Breite b der Höhe h des Vorsprungs 14 entspricht. Als besonders geeignet hat sich für die Breite b und für die Höhe h ein' Wert von 0,9 mm herausgestellt.

Am Außenumfang werden die höchsten Strömungsgeschwindigkeiten erzielt und eine Umlenkung der Luftströmung in eine andere Strömungsrichtung führt zu den größten Geschwindigkeitsdifferenzen, wodurch die Bremswirkung am größten ist. Da der Rotor auf einer Welle gelagert ist, kann sich die Störkontur nicht weiter als bis zu dieser Welle erstrecken.

Vorteilhafterweise kann der Störkonturraum oberhalb des Rotors angeordnet sein. Zwar erfordert eine Störkontur oben, die in der Regel in eine Deckelbaugruppe mit einem zusätzlichen Bauteil und einem Deckel eingearbeitet ist, eine genaue Abstimmung von zwei Bauteilen, nämlich des zusätzlichen Bauteils der Deckelbaugruppe einerseits und des Kopfgehäuses andererseits für eine genaue Positionierung der Störkontur relativ zum Auslasskanal, eine Nachrüstung von bestehenden Turbinen mit einer Bremse ist aber einfach durch den Austausch des alten Deckels möglich und vorhandene Turbinen können damit aufgerüstet werden.

Ein weiterer Vorteil besteht darin, dass die Kraftwirkung auf die Bremse auch auf den Deckel oder auf das zusätzliche Bauteil wirkt und diesen festzieht. Dadurch ist selbst für eine nur handfest angezogene Deckelbaugruppe ein selbstständiges Loslösen nicht mehr möglich, wobei davon ausgegangen wird, dass es sich um ein Rechtsgewinde und im Uhrzeigersinn drehende Turbinen handelt.

Vorteilhafterweise kann der Störkonturraum unterhalb des Rotors zur Werkzeugseite hin angeordnet sein. Wenn die Störkontur im Kopfteil werkzeugseitig angebracht ist, wird die Position relativ zum Auslasskanal im Herstellungsprozess des Kopfgehäuses, der ein Zerspanungsprozess ist, genau festgelegt. Die Winkellage der Störkontur entsteht in einem Bearbeitungsschritt innerhalb eines einzigen Bauteils, so dass die Störkontur fertigungstechnisch einfach und mit hoher Genauigkeit herstellbar ist. Zudem ermöglicht diese Anordnung eine bessere Ausnutzung des zur Verfügung stehenden Platzes im Kopfgehäuse und verhindert ein Herausragen des Kopfteils relativ zum Turbinenhals.

Um eine maximale Bremswirkung zu erreichen, können auch beide Anordnungen gleichzeitig realisiert werden, wobei dann sichergestellt werden muss, dass beide Stirnflächen des Rotors bzw. der Schaufeln offen sind.

Der Störkonturraum kann aber gegenüber der Welle noch zusätzlich in radialer Richtung begrenzt sein, etwa durch eine Gehäuseausformung oder durch eine Scheibe mit jeweils einem zum Rotor hin hervorstehenden Bund, der mit einer Nabe des Rotors zusammenwirkt. Dadurch wird der Störkonturraum abgeschlossen und die Strömungsführung kann in einer effizienten Weise erfolgen.

Vorteilhafterweise kann die Störkontur am Außenumfang der Wand der Bremskammer angeordnet sein und eine teilweise oder vollständige radiale Erstreckung bis zum Bund aufweisen.

Vörteilhafterweise kann an der dem Störkonturraum zugewandten Stirnseite der Schaufeln des Rotors eine Bremskontur vorgesehen sein, die mit der Störkontur zusammenwirkt. Dies hat den Vorteil, dass die Bremsleistung noch gesteigert werden kann, da diese Bremskontur am Rotor besonders für diese geänderte Luftströmung ausgelegt sein kann. Die Bremskontur kann insbesondere eine Höhe in

Richtung der Längsachse von mindestens 5% der Höhe der Schaufeln aufweisen, vorzugsweise mehr als 15% und höchstens 75%.

Vorteilhafterweise kann der Störkonturraum von einer Deckelbaugruppe bestehend aus mindestens einem Deckel und einem diesen lagernden und mit dem Gehäuse verbundenen Zwischenteil begrenzt sein.

### Kurze Beschreibung der Zeichnungen

Die Erfindung wird anhand der Zeichnung erläutert. Es zeigen:
- Fig. 1: ein zahnärztliches Präparationsinstrument mit einer erfindungsgemäßen Leerlaufbremse für eine Turbine in einer Seitenansicht;
- Fig. 2: die Turbine aus Fig. 1 in einer Detailansicht im Längsschnitt mit einer Turbinenkammer, die einen Störkonturraum und eine darin angeordnete Störkontur aufweist;
- Fig. 3: die Turbine aus Fig. 2 in einem Querschnitt durch die Turbinenkammer;
- Fig. 4: die Turbinenkammer ohne Rotor in einer Ansicht auf die Stirnwand mit der Störkontur;
- Fig. 5: ein Rotor mit einer Bremskontur in' einer Turbinenkammer gemäß der Erfindung,
- Fig. 6: eine alternative Ausführung mit einem durch einen Bund begrenzten Störkonturraum.

### Ausführungsform der Erfindung

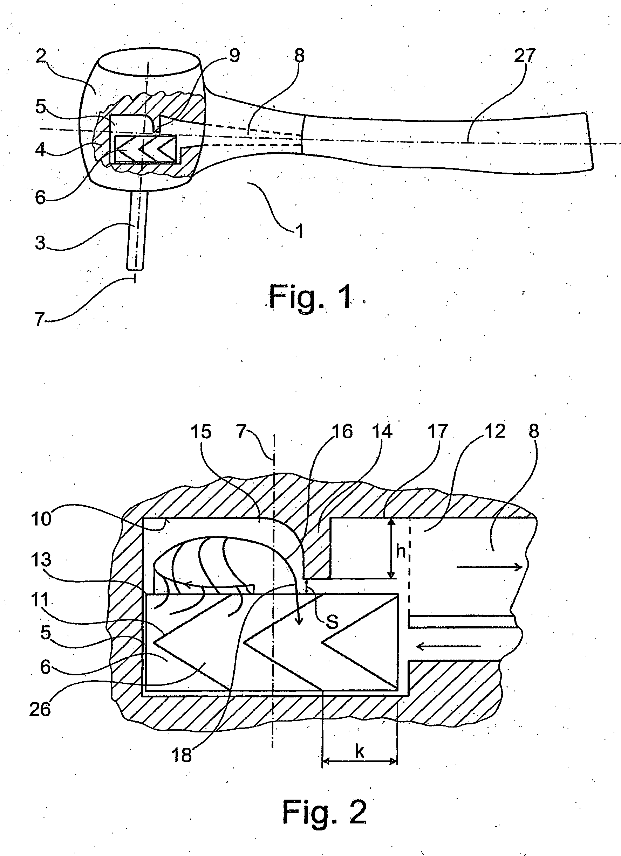

In Fig. 1 ist ein zahnärztliches Präparationsinstrument 1 schematisch in einer teilweise aufgebrochenen Seitenansicht dargestellt, welches zum Antrieb eines in einem Kopfteil 2 gelagerten und angetriebenen Werkzeugs 3 eine mit Druckluft beaufschlagte Turbine 4 aufweist. Die Turbine 4 umfasst eine Turbinenkammer 5, in der ein Rotor 6 um eine Längsachse 7 drehbar gelagert ist. Die Lagerung des Rotors 6 im Kopfteil 2 selbst und das Zusammenwirken des Rotors 6 mit dem Werkzeug 3 ist nicht dargestellt, es wird diesbezüglich auf den Stand der Technik verwiesen, aus dem unterschiedlichste Lösungen bekannt sind, beispielsweise in den eingangs zitierten Dokumenten. Das Präparationsiristrument 1 weist eine Mittelachse 27 auf, die auch durch das Kopfteil 2 verläuft.

Neben einer nicht dargestellten Druckluftzufuhr ist in dem Kopfteil 2 ein Rückluftkanal 8 vorgesehen, der die Druckluft aus der Turbinenkammer 5 herausführt, sodass die Druckluft durch ein Griffteil zu einem Kupplungsteil des Präparationsinstruments geführt ist, wie es aus dem Stand der Technik ebenfalls bekannt ist.

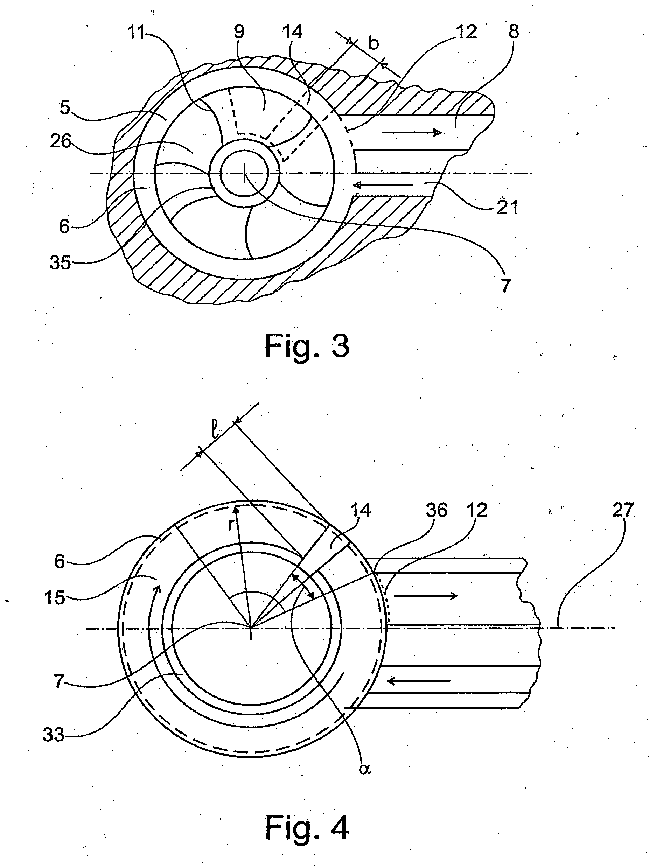

Bereits in Fig. 1 ist zu erkennen, dass Die Turbinenkammer mit einer Störkontur 9 versehen ist, die zusammen mit dem Rotor 6 in der Turbinenkammer 5 angeordnet ist. Die Funktionsweise dieser Störkontur 9 und das Zusammenspiel mit den übrigen Funktionsbauteilen wird in den Fig. 2 und 3 erläutert.

In Fig. 2 ist die Turbinenkammer 5 mit dem Rotor 6 im Detail dargestellt, wobei es sich nach wie vor um eine Prinzipskizze handelt, in der beispielsweise die Lagerung des Rotors 6 aus Gründen der Vereinfachung weggelassen wurde. Die Störkontur 9 ist an einer Wand 10 der Turbinenkammer 5 angeordnet. Der Rotor 6 weist Schaufeln 11 auf, die zur Verbesserung des Wirkungsgrads die für den Antrieb der Turbine vorgesehene Druckluft umlenken. Die von den Schaufeln 11 abströmende Druckluft, auch als Abluft bezeichnet, verlässt die Turbinenkammer 5 über eine Auslassöffnung 12, die die Turbinenkammer 5 mit dem Rückluftkanal 8 verbindet und gelangt so in den Rückluftkanal 8.

Die Auslassöffnung 12 ist derart in der Turbinenkammer 5 angeordnet, dass sowohl eine Stirnseite 13 des Rotors 6 bei der Drehung um die Längsachse 7 an der Auslassöffnung 12 vorbeistreicht als auch Teile der Schaufeln 11.

Die Stirnseite 13 des Rotors ist gegenüber den Schaufeln 11 geöffnet, sodass Luft aus den Schaufeln auch über die Stirnseite 13 abströmen kann.

Die an der der Stirnseite 13 gegenüberliegenden Wand 10 vorhandene Störkontur 9 ist durch einen Vorsprung 14 gebildet, sodass innerhalb der Turbinenkammer 5 von der Funktion her^{.}gesehen ein Störkonturraum 15 ausgebildet ist, in dem die Störkontur 9 aufgenommen ist. Die Auslassöffnung 12 erstreckt sich in der Höhe entlang der Längsachse 7 teilweise auch über den Störkonturraum 15. Dies hat zur Folge, dass die Auslassöffnung 12 einen Auslassquerschnitt aufweist, der so bemessen ist, dass sowohl ein Teil der Schaufeln 11 als auch zumindest ein Teil der an der Störkontur 9 vorbei geführten Luft an der Auslassöffnung 12 vorbeistreichen.

Der Vorsprung 14 der Störkontur 9 kann durch eine oder mehrere über die Wand 10 hervorstehende Rippe oder Rippen oder auch.Stege gebildet sein, wie sich aus der Ansicht auf die Bremskontur von Fig. 3 und insbesondere Fig. 4 ergibt. Der Vorsprung 14 ist am Außenumfang in dem Störkonturraum 15 angeordnet.

Wegen des Vorsprungs 14 in dem Störkonturraum 15 wird die oberhalb der Stirnseite des Rotors 6 mit dem Rotor 6 umlaufende Luftströmung abgelenkt, was durch den Pfeil 16 schematisch dargestellt ist. Am Vorsprung 14 erfährt die Luftströmung durch die Störkontur eine Querschnittsverengung. Dabei wird der Teil der Abluft, der sich im Störkonturraum 15 befindet, beim Vorbeistreichen an der Störkontur 9 in einen zwischen den Schaufeln 11 befindlichen Schaufelraum 26 mit einem Schaufelabstand k gedrückt, der ein Schaufelleervolumen bereitstellt. Dadurch kommt es zu einer Verzögerung dieser Luftteilchen und damit zu einer der Drehrichtung entgegengesetzt gerichteten Druckbeaufschlagung der Rotorschaufeln. Der Effekt ist im Bereich der Störkontur stark ausgeprägt und fällt stromaufwärts ab. Nach passieren der Störkontur ist der Effekt weitgehend abgeklungen.

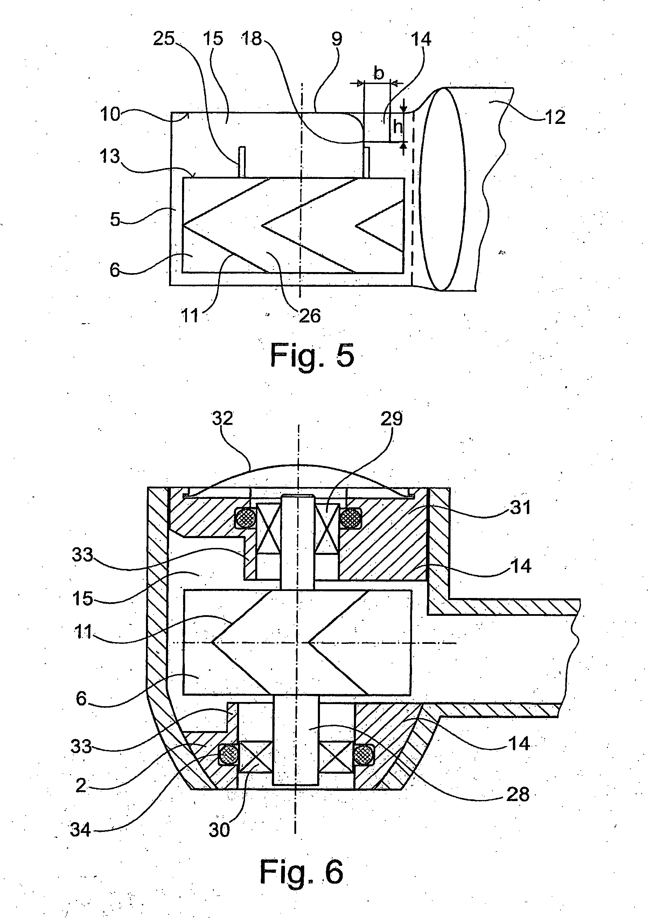

Die Störkontur 9 weist in Umfangsrichtung gesehen eine in Fig. 3 und Fig. 5 dargestellte Breite b auf, die maximal zwei Schaufeln 11 gleichzeitig überdeckt und am Außenumfang gemessen mindestens 0,1 mm beträgt, wobei sich herausgestellt hat, dass gute Ergebnisse erzielt werden, wenn die Breite b der Höhe h des Vorsprungs 14 entspricht. Als besonders geeignet hat sich für die Breite b und für die Höhe h ein Wert von 0,9 mm herausgestellt.

Die Form der Störkontur 9 kann strömungstechnisch optimiert sein.

In Fig. 3 ist die Turbine aus Fig. 2 in einem Querschnitt durch die Turbinenkammer 5 gezeigt, wobei die Störkontur 9 in Form des Vorsprungs 14 gestrichelt eingezeichnet ist, da sie in einer anderen Ebene liegt.

Anders als in Fig. 2 dargestellt ist hier der Rückluftkanal 8 seitlich neben einem Zuluftkanal 21 angeordnet, sodass die Auslassöffnung 12 sich auch über die gesamte Höhe der Turbinenkammer 5 erstrecken kann. Um den Wirkungsgrad in bekannter Weise zu verbessern, können die Schaufeln 11, die sich bis zu einer Rotornabe 35 erstrecken, auch gekrümmt sein. Zwei benachbarte Schaufeln 11 begrenzen mit der Rotornabe 35 den Schaufelraum 26.

Fig. 4 zeigt die Turbinehkammer ohne Rotor in einer Ansicht auf die Wand 10 des Störkonturraums 15 mit der als Vorsprung 14 ausgebildeten Störkontur. Der auf die Längsachse 7 bezogene umfangsseitige Abstand der in Strömungsrichtung gesehenen Vorderkante des Vorsprungs 14 zur Vorderkante 36 der Auslassöffnung 12 entspricht in Umfangsrichtung gesehen einem Winkel alpha von etwa 20°, wobei unter Beachtung des Abstandes zur Vorderkante 36 der Auslassöffnung 12 eine Anordnung an jeder Stelle des gesamten Umfangs möglich ist. Es hat sich herausgestellt, dass in einem Winkel alpha von 30° bezogen auf die Auslassöffnung 12 besonders gute Resultate erzielt werden.

Es können auch mehrere Vorsprünge vorgesehen werden, um die Bremswirkung zu erhöhen, wobei sich jedoch herausgestellt hat, dass bereits ein Vorsprung ausreichen kann.

Die radiale Länge 1 des vom Außenumfang sich radial nach innen erstreckenden Vorsprungs 14 nimmt hier den gesamten zur Verfügung stehenden Raum ein und entspricht dem 0,5-fachen des Radius r des gestrichelt dargestellten Rotors 6.

Diese Begrenzung kommt dadurch zustande, dass der gestrichelt dargestellte Rotor eine nicht dargestellte Lagerwelle aufweist, die im Kopfteil 2 geführt ist, wodurch die Turbinenkammer 5 immer mittig begrenzt wird. Darüber hinaus ist ein Bund 33 vorgesehen, der den Störkonturraum 15 radial begrenzt.

In Fig. 5 ist dargestellt, dass der Rotor 6 an seiner Stirnseite 13 mit einer Bremskontur 25 versehen sein kann, die hier an den Schaufeln 11 angeordnet sind und die in einem Abstand zu der Störkontur 14 im Störkonturraum 15 enden, wobei der Spalt 18 nun auf die Bremskontur 25 bezogen ist. Die Turbinenkammer 5 muss hier insgesamt eine größere Höhe aufweisen. Die Form der Störkontur 9 kann strömungstechnisch optimiert sein, wobei der Vorsprung 14 wiederum eine Breite b und eine Höhe h aufweist.

Wie in Fig. 6 dargestellt, ist der Störkonturraum 15 gegenüber einer Rotorwelle 28, die mittels eines oberen Lagers 29 und eines unteren Lagers 30 unmittelbar oder über Zwischenschaltung eines Zwischenteils 31 gegenüber dem Kopfteil 2 gelagert. ist, noch zusätzlich in radialer Richtung durch einem zum Rotor 6 hin hervorstehenden Bund 33 begrenzt, der jeweils mit dem Rotor 6 unter Ausbildung eines Spaltes zusammenwirkt. Dadurch wird der Störkonturraum 15 gegenüber der Rotorwelle 28 und den Lagern 29, 30 abgeschlossen und die Strömungsführung des zum Bremsen verwendeten Luftstroms zur Störkontur 9 in Form des Vorsprungs 14 hin kann in einer effizienten Weise erfolgen. Die Schaufeln 11 des Rotors 6 enden in radialer Richtung in einer in Fig. 3 dargestellten Rotornabe 35, so dass der Bund 33, zusätzlich auch in Fig. 4 dargestellt, der in Fig. 3 dargestellten Rotornabe 35 gegenüberliegt.

Das Zwischenteil 31 ist in das Kopfteil 2 eingeschraubt und trägt das obere Lager 29, das über einen O-Ring 34 elastisch gelagert ist.

## Patentansprüche

1. Zahnärztliches Präparationsinstrument (1) mit einer Turbine (4) zum Antrieb eines Werkzeugs (3) mittels Druckluft, aufweisend einen in einer Turbinenkammer (5) angeordneten und sich um eine Längsachse (7) drehenden Rotor (6), der sich bis zu einer Stirnseite (13) des Rotors (6) hin erstreckende Schaufeln (11) aufweist, wobei die Turbinenkammer (5) eine der Stirnseite (13) gegenüberliegende Wand (10) und eine Auslassöffnung (12) für die Druckluft zu einem Rückluftkanal (8) hin aufweist, wobei die Auslassöffnung (12) derart angeordnet ist, dass zumindest Teile der Schaufeln (11) bei der Drehung um die Längsachse (7) an der Auslassöffnung (12) vorbeistreichen, **dadurch gekennzeichnet, dass** die Turbinenkammer (5) einen der Stirnseite (13) benachbarten Störkonturraum (15) aufweist, dass die dem Störkonturraum zugewandte Stirnseite (13) der Schaufeln (11) des Rotors (6) zum Störkonturraum (15) hin offen ist und dass in dem Störkonturraum (15) eine durch mindestens einen sich in Richtung der Längsachse (7) über eine Höhe h erstreckender Vorsprung (14) an der der Stirnseite (13) gegenüberliegenden Wand (10) gebildete Störkontur (9) angeordnet ist.

2. Zahnärztliches Präparationsinstrument nach Anspruch 1, **dadurch gekennzeichnet, dass** die im Störkonturraum (15) angeordnete Störkontur (9) mit einem Winkel alpha gegen die Drehrichtung des Rotors von mindestens 0°, insbesondere in einem Bereich von 10° bis 50°, insbesondere 30° zur Auslassöffnung (12) beabstandet ist.

3. Zahnärztliches Präparationsinstrument nach einem der Ansprüche 1 bis 2, **dadurch gekennzeichnet, dass** die im Störkonturraum (15) angeordnete Störkontur (9) in Umfangsrichtung gesehen eine Breite (b) und eine Höhe h in Richtung der Längsachse (7) von mindestens 0,25 mm aufweist und dass eine Weite eines Spalts s zwischen der Störkontur (9) und der Stirnseite (13) des Rotors (6) bis 1 mm beträgt.

4. Zahnärztliches Präparationsinstrument nach Anspruch 3, **dadurch gekennzeichnet, dass** die Breite b am Außenumfang der Schaufeln (11) gemessen mindestens 0,1 mm ist und maximal zwei Schaufeln gleichzeitig überdeckt.

5. Zahnärztliches Präparationsinstrument nach einem der Ansprüche 1 bis 4, **dadurch gekennzeichnet, dass** der Störkontürraum (15) oberhalb des Rotors (6) gegenüber der Seite des Werkzeugs (3) angeordnet ist.

6. Zahnärztliche Präparationsinstrument nach einem der Ansprüche 1 bis 5, **dadurch gekennzeichnet, dass** der Störkonturraum (15) unterhalb des Rotors (6) zur Seite des Werkzeugs (3) hin angeordnet ist.

7. Zahnärztliches Präparationsinstrument nach einem der Ansprüche 1 bis 6, **dadurch gekennzeichnet, dass** der Störkonturraum (15) radial innenliegend durch einen mit dem Rotor (6) zusammenwirkenden Bund (33) begrenzt ist.

8. Zahnärztliches Präparationsinstrument nach Anspruch 7, **dadurch gekennzeichnet, dass** die Störkontur (9) am Außenumfang der Wand (10) der Störkonturraum (15) angeordnet ist und eine radiale Erstreckung teilsweise oder vollständig bis zum Bund (33) aufweist.

9. Zahnärztliches Präparationsinstrument nach einem der Ansprüche 1 bis 8, **dadurch gekennzeichnet, dass** an der dem Störkonturraum (15) zugewandten Stirnseite (13) der Schaufeln (11) des Rotors (6) eine Bremskontur (25) vorgesehen ist, die mit der Störkontur (9) zusammenwirkt.

10. Zahnärztliches Präparationsinstrument nach einem der Ansprüche 1 bis 9, **dadurch gekennzeichnet, dass** der Störkonturraum (15) von einer Deckelbaugruppe bestehend aus mindestens einem Deckel (32) und einem diesen lagernden und mit dem Gehäuse verbundenen Zwischenteil (31) begrenzt ist.

## Claims

1. A dentists' preparation instrument (1) having a turbine (4) for driving a tool (3) by means of compressed air, having a rotor (6), which is arranged in a turbine compartment (5) and rotates about a longitudinal axis (7), having blades (11) extending up to a front side (13) of the rotor (6), wherein the turbine compartment (5) has a wall (10) opposite the front side (13) and a discharge port (12) for the compressed air toward a return air duct (8), wherein the discharge port (12) is arranged, so that at least parts of the blades (11) pass by the discharge port (12) in rotation about the longitudinal axis (7), **characterized in that** the turbine compartment (5) has a disruptive contour chamber (15) adjacent to the front side (13), the front side (13) of the blades (11) of the rotor (6) facing the disruptive contour chamber is open toward the disruptive contour chamber (15), and a disruptive contour (9) formed by at least one protrusion (14) on the wall (10) opposite the face (13), said protrusion extending over a height h in the direction of the longitudinal axis (7) is arranged in the disruptive contour chamber (15).

2. The dentists' preparation instrument according to claim 1, **characterized in that** the disruptive contour (9) arranged in the disruptive contour chamber (15) is at a distance from the discharge port (12) with an angle α of at least 0°, in particular in a range of 10° to 50°, in particular 30°, with respect to the direction of rotation of the rotor.

3. The dentists' preparation instrument according to one of claims 1 to 2, **characterized in that** the disruptive contour (9) arranged in the disruptive contour chamber (15), as seen in the peripheral direction, has a width (b) and a height h of at least 0.25 mm in the direction of the longitudinal axis (7), and the width of a gap s between the disruptive contour (9) and the front side (13) of the rotor (6) amounts to up to 1 mm.

4. The dentists' preparation instrument according to claim 3, **characterized in that** the width b, measured at the outside circumference of the blades (11), is at least 0.1 mm and covers at most two blades at the same time.

5. The dentists' preparation instrument according to one of claims 1 to 4, **characterized in that** the disruptive contour chamber (15) is arranged above the rotor (6) and opposite the side of the tool (3).

6. The dentists' preparation instrument according to one of claims 1 to 5, **characterized in that** the disruptive contour chamber (15) is arranged beneath the rotor (6) toward the side of the tool (3).

7. The dentists' preparation instrument according to one of claims 1 to 6, **characterized in that** the disruptive contour chamber (15) is bordered on the inside radially by a collar (33) cooperating with the rotor (6).

8. The dentists' preparation instrument according to claim 7, **characterized in that** the disruptive contour (9) is arranged on the outside circumference of the wall (10) of the disruptive contour chamber (15) and extends radially partially or completely up to the collar (33).

9. The dentists' preparation instrument according to one of claims 1 to 8, **characterized in that** a braking contour (25), which cooperates with the disruptive contour (9), is provided on the front side (13) of the blades (11) of the rotor (6) facing the disruptive contour chamber (15).

10. The dentists' preparation instrument according to one of claims 1 to 9, **characterized in that** the disruptive contour chamber (15) is bordered by a cover module consisting of at least one cover (32) and one intermediate part (31) supporting the former and connected to the housing.

## Revendications

1. Instrument de préparation dentaire (1) avec une turbine (4) pour l'entraînement d'un outil (3) au moyen d'air comprimé, présentant un rotor (6) disposé dans une chambre de turbine (5) et tournant autour d'un axe longitudinal (7), qui comporte des pales (11) s'étendant jusqu'à une face frontale (13) du rotor (6), dans lequel la chambre de turbine (5) présente une paroi (10) opposée à la face frontale (13) et un orifice de sortie (12) pour l'air comprimé orienté en direction d'une conduite d'air de retour (8), dans lequel l'orifice de sortie (12) est aménagé de sorte qu'au moins des parties des pales (11) passent devant l'ouverture de sortie (12) lors de la rotation autour de l'axe longitudinal (7), **caractérisé en ce que** la chambre de turbine (5) présente un espace de contour perturbateur (15) adjacent à la face frontale (13), **en ce que** la face frontale (13) des pales du rotor (6), qui fait face à l'espace de contour perturbateur, est ouverte en direction de l'espace de contour perturbateur (15) et **en ce que**, dans l'espace de contour perturbateur (15), un contour perturbateur (9) formé au niveau de la paroi (10) opposée à la face frontale (13) est réalisé par au moins une partie saillante (14) s'étendant en direction de l'axe longitudinal (7) sur toute une hauteur h.

2. Instrument de préparation dentaire selon la revendication 1, **caractérisé en ce que** le contour perturbateur (9) aménagé dans l'espace de contour perturbateur (15) est espacé selon un angle alpha, formé à l'opposé de la direction de rotation du rotor, d'au moins 0 °, notamment dans une plage de 10 ° à 50 °, en particulier 30 °, par rapport à l'orifice de sortie (12).

3. Instrument de préparation dentaire selon l'une quelconque des revendications 1 à 2, **caractérisé en ce que** le contour perturbateur (9) aménagé dans l'espace de contour perturbateur (15), observé dans la direction circonférentielle, présente une largeur (b) et une hauteur h dans la direction de l'axe longitudinal (7) d'au moins 0,25 mm et **en ce qu'**une largeur d'un intervalle s entre le contour perturbateur (9) et la face frontale (13) du rotor (6) va jusqu'à 1 mm.

4. Instrument de préparation dentaire selon la revendication 3, **caractérisé en ce que** la largeur b mesurée sur la périphérie externe des pales (11) est d'au moins 0,1 mm et recouvre au maximum deux pales en même temps.

5. Instrument de préparation dentaire selon l'une quelconque des revendications 1 à 4, **caractérisé en ce que** l'espace de contour perturbateur (15) est aménagé au-dessus du rotor (6) à l'opposé de la face de l'outil (3).

6. Instrument de préparation dentaire selon l'une quelconque des revendications 1 à 5, **caractérisé en ce que** l'espace de contour perturbateur (15) est aménagé au-dessous du rotor (6) sur la face dirigée vers l'outil (3).

7. Instrument de préparation dentaire selon l'une quelconque des revendications 1 à 6, **caractérisé en ce que** l'espace de contour perturbateur (15) est délimité, sur le plan radial vers l'intérieur, par une ceinture (33) agissant conjointement avec le rotor (6).

8. Instrument de préparation dentaire selon la revendication 7, **caractérisé en ce que** le contour perturbateur (9) est aménagé sur la périphérie externe de la paroi (10) de l'espace de contour perturbateur (15) et présente une extension radiale partielle ou totale jusqu'à la ceinture (33).

9. Instrument de préparation dentaire selon l'une quelconque des revendications 1 à 8, **caractérisé en ce qu'**un contour de freinage (25) est prévu sur la face frontale (13) des pales (11) du rotor (6) orientée vers l'espace de contour perturbateur (15), lequel contour agit conjointement avec le contour perturbateur (9).

10. Instrument de préparation dentaire selon l'une quelconque des revendications 1 à 9, **caractérisé en ce que** l'espace de contour perturbateur (15) est délimité par un ensemble de couvercle, composé d'au moins un couvercle (32) et d'une pièce intermédiaire (31) supportant celui-ci et raccordée au boîtier.
